# EUROPEAN PATENT APPLICATION

(11) **EP 4 368 575 A1**
(43) Date of publication of application: **15.05.2024**
(21) Application number: 22837917.8
(22) Date of filing: 04.07.2022
(51) Int. Cl.: C01G 31/02, H01M 8/18, C22C 21/00, C22C 29/12

(54) **METHOD FOR PARTIALLY REDUCING VANADIUM PENTOXIDE USING AMMONIA SOLUTION, AND VANADIUM DIOXIDE POWDER PREPARED THEREBY**

(30) Priority: 06.07.2021 KR 20210088261
(71) Applicant: KOREA INSTITUTE OF GEOSCIENCE AND MINERAL RESOURCES, Yuseong-gu Daejeon 34132 (KR)
(72) Inventor: KIM, Byung-Su, Wanju-gun Jeollabuk-do 55364 (KR); RYU, Taegong, Daejeon 34090 (KR); CHANG, Han Kwon, Daejeon 35201 (KR); CHOI, Ji-Hyuk, Sejong 30092 (KR); SUH, Chang-Youl, Daejeon 34023 (KR); YOO, Jeonghyun, Daejeon 35258 (KR); CHO, Sung-Wook, Sejong 30130 (KR); PARK, Tae Jun, Daejeon 34386 (KR)
(74) Representative: Witte, Weller & Partner Patentanwälte mbB
(86) International application number: PCT/KR2022/009623
(87) International publication number: WO 2023/282565

(57) **Abstract**

The present disclosure provides a method for partially reducing vanadium pentoxide (V₂O₅) using an ammonia solution, wherein ammonia is used to convert vanadium pentoxide (V₂O₅) powder to ammonia vanadate (NH₄VO₃), which is an intermediate material, after which the ammonia vanadate is heated under normal or reduced pressure in a nitrogen or argon atmosphere and then maintained for a certain period of time to partially reduce the vanadium pentoxide and thereby produce vanadium dioxide (VO₂) powder; and vanadium dioxide (VO₂) powder produced thereby.

## Description

### [Technical Field]

The present disclosure relates to a method for partially reducing vanadium pentoxide (V₂O₅) using an ammonia solution, and vanadium dioxide (VO₂) powder produced thereby. In more detail, the present disclosure relates to a method for partially reducing vanadium pentoxide (V₂O₅) using an ammonia solution, wherein ammonia is used to convert vanadium pentoxide (V₂O₅) powder to ammonia vanadate (NH₄VO₃), which is an intermediate material, after which the ammonia vanadate is heated under normal or reduced pressure in a nitrogen or argon atmosphere and then maintained for a certain period of time to partially reduce the vanadium pentoxide and thereby produce vanadium dioxide (VO₂) powder; and vanadium dioxide (VO₂) powder produced thereby.

### [Background Art]

It is generally well known that vanadium redox batteries have lower energy density than lithium-ion batteries, but have a lower risk of explosion. Therefore, the usage of vanadium redox batteries is steadily increasing, and research to improve the performance of vanadium redox batteries is increasing significantly. In particular, as new and renewable industries such as solar and wind power have emerged significantly in recent years, demand for vanadium redox batteries has increased, and the use of vanadium pentoxide (V₂O₅) powder as a raw material for vanadium electrolyte in vanadium redox batteries is also increasing significantly.

Currently, methods for producing electrolyte for vanadium redox batteries can be roughly divided into a method of using vanadium pentoxide (V₂O₅) powder depending on the vanadium raw material used in preparing the electrolyte, and a method of using vanadium sulfate (VOSO₄) powder prepared from vanadium pentoxide (V₂O₅) powder.

Among them, the method of using vanadium pentoxide (V₂O₅) powder comprises thermally decomposing ammonium vanadate (NH₄VO₃), which is an intermediate smelting product in the process of preparing vanadium pentoxide (V₂O₅) powder from vanadium concentrate, to prepare vanadium pentoxide (V₂O₅) powder and, thus, has a disadvantage in that, although it is cheaper than the price of vanadium sulfate (VOSO₄) powder, it is relatively expensive.

In addition, that method has the disadvantages in that vanadium pentoxide (V₂O₅) powder does not dissolve well in a sulfuric acid solution and, thus, involves the use of expensive acetic acid ((COOH)₂) as an additive in the process of preparing a vanadium electrolyte solution, which increases processing costs; and, during this process, carbon dioxide as a greenhouse gas is inevitably released and sulfuric acid solution is scattered. In addition, vanadium pentoxide (V₂O₅) powder has a disadvantage in that its dissolution time is as long as 3 days.

In addition, the method of using vanadium sulfate (VOSO₄) powder has a disadvantage in that vanadium sulfate (VOSO₄) powder is prepared by using vanadium pentoxide (V₂O₅) powder prepared by smelting vanadium concentrate and a sulfuric acid solution, the price of vanadium sulfate (VOSO₄) powder is very expensive.

Meanwhile, vanadium pentoxide (V₂O₅) powder is an important industrial raw material that has traditionally been widely used in the steel industry, chemical industry, and aviation industry. In particular, it is widely used in the steel industry to increase the high-temperature strength, wear resistance, and shock absorption of steel materials. In the steel industry, vanadium is used in the form of an ferroalloy called ferrovanadium (FeV).

Currently, the method for preparing ferrovanadium iron alloy comprises a method of using a thermite reaction process to prepare vanadium pentoxide (V₂O₅) powder as a raw material.

Preparation of ferrovanadium ferroalloy by the thermite reaction process has a disadvantage in that vanadium pentoxide (V₂O₅) powder is used as a raw material, and expensive aluminum powder is used as a reducing agent such that the processing cost is high. Meanwhile, the method for preparing vanadium dioxide (VO₂) powder generally comprises a gas reduction method of slowly reducing vanadium pentoxide to reducing gases such as carbon monoxide (CO) and hydrogen (H₂), and a wet method of preparing vanadium dioxide by using an organic acid and sulfuric acid.

Among them, the method of preparing vanadium dioxide powder by using carbon monoxide has a disadvantage in that it involves emitting carbon dioxide as a global warming gas.

In addition, the method of preparing vanadium dioxide powder by using hydrogen has a disadvantage in that it has a risk of explosion due to hydrogen gas.

In addition, the method of preparing vanadium dioxide powder by using an organic acid and sulfuric acid has a disadvantage in that it requires difficult operating conditions and involves discharging wastewater.

Therefore, through various studies, the present applicant developed a method for partially reducing vanadium pentoxide (V₂O₅) using an ammonia solution, wherein vanadium pentoxide (V₂O₅) powder is converted to ammonia vanadate (NH₄VO₃), which is an intermediate material, after which the ammonia vanadate is heated in a nitrogen or argon atmosphere and then maintained for a certain period of time to partially reduce the vanadium pentoxide and thereby produce vanadium dioxide (VO₂) powder; and vanadium dioxide (VO₂) powder produced thereby, and completed the present invention.

### [Disclosure]

### [Technical Problem]

Accordingly, an objective of the present disclosure is to provide a method for partially reducing vanadium pentoxide (V₂O₅) by using an ammonia solution to inexpensively prepare, by using vanadium pentoxide (V₂O₅) powder as a raw material, vanadium dioxide (VO₂) powder which is cheaper than vanadium pentoxide (V₂O₅) powder and vanadium sulfate (VOSO₄) powder, has a shorter dissolution time in a sulfuric acid solution than vanadium pentoxide (V₂O₅) powder, and does not require additives such as acetic acid ((COOH)₂) during sulfuric acid leaching.

Further, an objective of the present disclosure is to provide a method for partially reducing vanadium pentoxide (V₂O₅) by using an ammonia solution to prepare, by using vanadium pentoxide (V₂O₅) powder as a raw material, vanadium dioxide (VO₂) powder that is a vanadium raw material used in the process of preparing vanadium electrolyte for vanadium redox batteries, which can fundamentally block emission of carbon dioxide that is a greenhouse gas inevitably emitted in the process of preparing vanadium electrolyte for vanadium redox batteries by using vanadium oxide (V₂O₅) powder, and scattering of a sulfuric acid solution.

Further, an objective of the present disclosure is to provide a method for partially reducing vanadium pentoxide (V₂O₅) by using an ammonia solution to prepare, by using vanadium pentoxide (V₂O₅) powder as a raw material, vanadium dioxide (VO₂) powder that is a vanadium raw material used in the process of preparing vanadium electrolyte for vanadium redox batteries, in order to solve the problem that the process time is as long as 3 days, that is a disadvantage of preparing the vanadium electrolyte for vanadium redox batteries by using vanadium pentoxide (V₂O₅) powder.

Further, an objective of the present disclosure is to provide a method for partially reducing vanadium pentoxide (V₂O₅) by using an ammonia solution to prepare, by using vanadium pentoxide (V₂O₅) powder as a raw material, vanadium dioxide (VO₂) powder that is a vanadium raw material used in the process of preparing vanadium electrolyte for vanadium redox batteries, in order to reduce the amount of aluminum powder to be used which is an expensive reducing agent in a thermite reaction process as a ferrovanadium ferroalloy process.

Further, an objective of the present disclosure is to provide a method for partially reducing vanadium pentoxide (V₂O₅) by using an ammonia solution to prepare, by using vanadium pentoxide (V₂O₅) powder as a raw material, vanadium dioxide (VO₂) powder as a vanadium raw material used in the process of preparing vanadium electrolyte for vanadium redox batteries by using directly as a raw material ammonia vanadate (NH₄VO₃) that is a smelting intermediate product in the process of preparing vanadium pentoxide (V₂O₅) powder from vanadium concentrate, and vanadium dioxide (VO₂) powder as a vanadium raw material used in the process of preparing ferrovanadium ferroalloy.

Further, an objective of the present disclosure is to provide a method for partially reducing vanadium pentoxide (V₂O₅) by using an ammonia solution to prepare vanadium dioxide (VO₂) powder by using vanadium pentoxide (V₂O₅) powder as a raw material, in order to solve disadvantages, e.g., a disadvantage of the method for preparing vanadium dioxide powder using carbon monoxide that it involves emission of carbon dioxide as a global warming gas, a disadvantage of the method for preparing vanadium dioxide powder using hydrogen that is has a risk of explosion due to hydrogen gas, and disadvantages of the method for preparing vanadium dioxide powder using an organic acid and sulfuric acid that it requires difficult operating conditions and involves discharging wastewater.

The objectives of the present disclosure are not limited to the objects described above and other objectives will be clearly understood by those skilled in the art from the following description.

### [Technical Solution]

In order to achieve the objectives, according to an aspect of the present disclosure, there is provided a method for partially reducing vanadium pentoxide (V₂O₅) by using an ammonia solution, comprising the steps of:
leaching vanadium pentoxide (V₂O₅) powder with an aqueous alkaline salt solution, followed by separation and filtration, and reaction with an ammonia solution to prepare ammonium vanadate (NH₄VO₃) powder;
heating the ammonium vanadate (NH₄VO₃) powder in an electric furnace or horizontal furnace under normal pressure in a nitrogen or argon atmosphere, followed by maintaining for a certain period of time, to partially reduce the ammonium vanadate (NH₄VO₃) powder to vanadium dioxide (VO₂) powder; and
cooling the reduced vanadium dioxide (VO₂) powder in an electric furnace or horizontal furnace.

According to one embodiment of the present disclosure, the alkaline salt may be NaOH or KOH.

According to one embodiment of the present disclosure, the leaching reaction may be performed at 20 to 80 °C for 0.5 to 24 hours.

According to one embodiment of the present disclosure, the ammonia may be added, followed by reaction at 20 to 80° C for 0.5 to 24 hours, to prepare ammonia vanadate (NH₄VO₃).

According to one embodiment of the present disclosure, the ammonium vanadate (NH₄VO₃) powder may be charged into an alumina crucible and heated in an electric furnace or horizontal furnace under normal pressure in a nitrogen or argon atmosphere.

According to one embodiment of the present disclosure, the ammonium vanadate (NH₄VO₃) powder may be heated to 500 to 800 °C.

According to one embodiment of the present disclosure, the temperature may be maintained for 5 minutes to 2 hours after heating the ammonium vanadate (NH₄VO₃) powder to partially reduce the ammonium vanadate (NH₄VO₃) powder to vanadium dioxide (VO₂) powder.

According to one embodiment of the present disclosure, the reduced vanadium dioxide (VO₂) powder may be cooled to 50 to 120° C in an electric furnace or horizontal furnace in a nitrogen or argon atmosphere.

According to one embodiment of the present disclosure, the method may further comprise cooling the reduced vanadium dioxide (VO₂) powder in the air after cooling the powder in an electric furnace or a horizontal furnace.

Further, according to another aspect of the present disclosure, there is provided a method for partially reducing vanadium pentoxide (V₂O₅) by using an ammonia solution, comprising the steps of:
leaching vanadium pentoxide (V₂O₅) powder with an aqueous alkaline salt solution, followed by separation and filtration, and reaction with an ammonia solution to prepare ammonium vanadate (NH₄VO₃) powder;
heating the ammonium vanadate (NH₄VO₃) powder in a vacuum induction furnace under reduced pressure in a nitrogen or argon atmosphere, followed by maintaining for a certain period of time, to partially reduce the ammonium vanadate (NH₄VO₃) powder to vanadium dioxide (VO₂) powder; and
cooling the reduced vanadium dioxide (VO₂) powder in a vacuum induction furnace.

According to one embodiment of the present disclosure, the alkaline salt may be NaOH or KOH.

According to one embodiment of the present disclosure, the leaching reaction may be performed at 20 to 80 °C for 0.5 to 24 hours.

According to one embodiment of the present disclosure, the ammonia may be added, followed by reaction at 20 to 80° C for 0.5 to 24 hours, to prepare ammonia vanadate (NH₄VO₃).

According to one embodiment of the present disclosure, the ammonium vanadate (NH₄VO₃) powder may be charged into an alumina crucible and heated in a vacuum induction furnace under reduced pressure in a nitrogen or argon atmosphere.

According to one embodiment of the present disclosure, the reduced pressure may be 0.001 atmosphere to 0.1 atmosphere.

According to one embodiment of the present disclosure, the ammonium vanadate (NH₄VO₃) powder may be heated to 300 to 480 °C.

According to one embodiment of the present disclosure, the temperature may be maintained for 5 minutes to 2 hours after heating such that the ammonium vanadate (NH₄VO₃) powder is partially reduced to vanadium dioxide (VO₂) powder.

According to one embodiment of the present disclosure, the reduced vanadium dioxide (VO₂) powder may be cooled to 50 to 120° C in a vacuum induction furnace in a nitrogen or argon atmosphere.

According to one embodiment of the present disclosure, the method may further comprise cooling the reduced vanadium dioxide (VO₂) powder in the air after cooling the powder in a vacuum induction furnace.

Further, according to another aspect of the present disclosure, there is provided vanadium dioxide powder prepared by the method for partially reducing vanadium pentoxide (V₂O₅) under normal pressure by using an ammonia solution.

Further, a vanadium redox battery prepared from the vanadium dioxide powder is provided.

Further, an aluminum-vanadium alloy prepared from the vanadium dioxide powder is provided.

Further, according to another aspect of the present disclosure, there is provided vanadium dioxide powder prepared by the method for partially reducing vanadium pentoxide (V₂O₅) under reduced pressure by using an ammonia solution.

Further, a vanadium redox battery prepared from the vanadium dioxide powder is provided.

Further, an aluminum-vanadium alloy manufactured from the vanadium dioxide powder is provided.

### [Advantageous Effects]

According to the present disclosure, there is provided a method for partially reducing vanadium pentoxide (V₂O₅) under normal or reduced pressure by using an ammonia solution to prepare vanadium dioxide (VO₂) powder from vanadium pentoxide (V₂O₅), which does not emit carbon dioxide that is a global warming gas, and has no risk of gas explosion, unlike a gas reduction method, and does not use large amounts of chemicals, does not generate large amounts of waste water, and has a short process time, unlike a wet method using an organic acid and sulfuric acid.

Further, the present disclosure provides a method of partially reducing vanadium pentoxide (V₂O₅) under normal or reduced pressure by using an ammonia solution to prepare vanadium dioxide (VO₂) powder from vanadium pentoxide (V₂O₅), which inexpensively produces expensive aluminum-vanadium (AlV) alloy and vanadium dioxide (VO₂) powder used as a raw material for vanadium electrolyte in vanadium redox battery batteries and, thus, is economical.

Further, the present disclosure provides a method of partially reducing vanadium pentoxide (V₂O₅) under normal or reduced pressure by using an ammonia solution to prepare vanadium dioxide (VO₂) powder from vanadium pentoxide (V₂O₅), which inexpensively produce vanadium dioxide (VO₂) powder which is cheaper than vanadium pentoxide (V₂O₅) powder and vanadium sulfate (VOSO₄) powder, has a shorter dissolution time in a sulfuric acid solution than vanadium pentoxide (V₂O₅) powder, and does not require additives such as acetic acid ((COOH)₂) during sulfuric acid leaching and, thus, is economical.

Further, the present disclosure provides a method of partially reducing vanadium pentoxide (V₂O₅) under normal or reduced pressure by using an ammonia solution to prepare vanadium dioxide (VO₂) powder that is a vanadium raw material needed to reduce the use of aluminum powder as an expensive reducing agent in the process of preparing ferrovanadium and, thus, is economical.

The effects of the present disclosure are not limited thereto and it should be understood that the effects include all effects that can be inferred from the configuration of the present disclosure described in the following specification or claims.

### [Description of Drawings]

FIG. 1 is a process flow diagram of reduction of vanadium pentoxide (V₂O₅) using an ammonia solution and a process flow diagram using a horizontal furnace and a vacuum induction furnace according to an embodiment of the present disclosure.
FIG. 2 shows photographs of vanadium pentoxide (V₂O₅) powder as a raw material and ammonia vanadate (NH₄VO₃) powder as an intermediate material used in Embodiment 1 of the present disclosure, and vanadium dioxide (VO₂) powder prepared in Embodiment 1 of the present disclosure.
FIG. 3 shows the results of X-ray diffraction analysis (XRD) of vanadium pentoxide (V₂O₅) powder as a raw material and ammonia vanadate (NH₄VO₃) powder as an intermediate material used in Embodiment 2 of the present disclosure and vanadium dioxide (VO₂) powder prepared in Embodiment 2 of the present disclosure.
FIG. 4 is a leaching rate graph of vanadium pentoxide (V₂O₅) powder as a raw material used in Embodiment 2 of the present disclosure, and vanadium dioxide (VO₂) powder prepared in Embodiment 2 of the present disclosure.

### [Best Mode]

Hereinafter, preferred embodiments of the present disclosure will be described with reference to accompanying drawings.

The advantages and features of the present disclosure, and methods of achieving them will be clear by referring to the exemplary embodiments that will be described hereafter in detail with reference to the accompanying drawings.

However, the present disclosure is not limited to the exemplary embodiments described hereafter and may be implemented in various ways, and the exemplary embodiments are provided to complete the description of the present disclosure and let those skilled in the art completely know the scope of the present disclosure and the present disclosure is defined by claims.

Further, when it is determined that well-known technologies, etc. may make the scope of the present disclosure unclear, they will not be described in detail in the following description.

Hereinafter, the present disclosure is described in detail.

### Method for partially reducing vanadium pentoxide under normal pressure by using ammonia solution

According to the present disclosure, there is provided a method for partially reducing vanadium pentoxide (V₂O₅) under normal pressure by using an ammonia solution to prepare vanadium dioxide (VO₂) powder from vanadium pentoxide (V₂O₅), which does not emit carbon dioxide that is a global warming gas, and has no risk of gas explosion, unlike a gas reduction method, and does not use large amounts of chemicals, does not generate large amounts of waste water, and has a short process time, unlike a wet method using an organic acid and sulfuric acid.

Further, the present disclosure provides a method of partially reducing vanadium pentoxide (V2O5) under normal pressure by using an ammonia solution to prepare vanadium dioxide (VO₂) powder from vanadium pentoxide (V₂O₅), which inexpensively produces expensive aluminum-vanadium (AlV) alloy and vanadium dioxide (VO₂) powder used as a raw material for vanadium electrolyte in vanadium redox battery batteries and, thus, is economical.

Further, the present disclosure provides a method of partially reducing vanadium pentoxide (V₂O₅) under normal pressure by using an ammonia solution to prepare vanadium dioxide (VO₂) powder from vanadium pentoxide (V₂O₅), which inexpensively produce vanadium dioxide (VO₂) powder which is cheaper than vanadium pentoxide (V₂O₅) powder and vanadium sulfate (VOSO₄) powder, has a shorter dissolution time in a sulfuric acid solution than vanadium pentoxide (V₂O₅) powder, and does not require additives such as acetic acid ((COOH)₂) during sulfuric acid leaching and, thus, is economical.

Further, the present disclosure provides a method of partially reducing vanadium pentoxide (V₂O₅) under normal pressure by using an ammonia solution to prepare vanadium dioxide (VO₂) powder that is a vanadium raw material needed to reduce the use of aluminum powder as an expensive reducing agent in the process of preparing ferrovanadium and, thus, is economical.

The method for partially reducing vanadium pentoxide (V₂O₅) under normal pressure by using an ammonia solution, comprising the steps of:
leaching vanadium pentoxide (V₂O₅) powder with an aqueous alkaline salt solution, followed by separation and filtration, and reaction with an ammonia solution to prepare ammonium vanadate (NH₄VO₃) powder;
heating the ammonium vanadate (NH₄VO₃) powder in an electric furnace or horizontal furnace under normal pressure in a nitrogen or argon atmosphere, followed by maintaining for a certain period of time, to partially reduce the ammonium vanadate (NH₄VO₃) powder to vanadium dioxide (VO₂) powder; and
cooling the reduced vanadium dioxide (VO₂) powder in an electric furnace or horizontal furnace.

Here, the reducing agent for removing oxygen from vanadium pentoxide is hydrogen gas generated by thermal decomposition of ammonia vanadate (NH₄VO₃). The generated hydrogen gas reacts with oxygen attached to vanadium and removes oxygen, thereby partially reducing vanadium pentoxide to vanadium dioxide.

Preparation of the ammonia vanadate (NH₄VO₃) requires an aqueous alkaline salt solution and an ammonia solution.

The alkaline salt may be NaOH or KOH.

The leaching reaction may be performed at 20 to 80 °C for 0.5 to 24 hours.

The ammonia may be added, followed by reaction at 20 to 80° C for 0.5 to 24 hours, to prepare ammonia vanadate (NH₄VO₃).

Here, the ammonia component may comprise ammonium chloride (NH₄Cl), ammonium hydroxide (NH₄OH), ammonium sulfate ((NH4)2SO4), and ammonium nitrate (NH₄NO₃).

Further, the ammonium vanadate (NH₄VO₃) powder may be charged into an alumina crucible and heated in an electric furnace or horizontal furnace under normal pressure in a nitrogen or argon atmosphere.

Here, the ammonium vanadate (NH₄VO₃) powder may be heated to 500 to 800 °C.

Here, if the heating temperature is less than 500°C, there may be a problem that the reduction effect is reduced. Further, if the heating temperature exceeds 800°C, there may be problems that, although the reduction effect is minimal, volatilization loss of vanadium pentoxide (V₂O₅) having a high vapor pressure and energy consumption increase.

The temperature may be maintained for 5 minutes to 2 hours after heating such that the ammonium vanadate (NH₄VO₃) powder is partially reduced to vanadium dioxide (VO₂) powder.

Here, if the heating time is less than 5 minutes, there may be a problem that the reduction effect is reduced. Further, if the heating time exceeds 2 hours, there may be problems that, although the reduction effect is minimal, volatilization loss of vanadium pentoxide (V₂O₅) having a high vapor pressure and energy consumption increase.

Further, the reduced vanadium dioxide (VO₂) powder may be cooled to 50 to 120° C in an electric furnace or horizontal furnace in a nitrogen or argon atmosphere.

At this time, the cooling may be performed in an electric furnace or horizontal furnace in a nitrogen or argon atmosphere.

Further, the method may further comprise cooling the reduced vanadium dioxide (VO₂) powder in the air after cooling the powder in an electric furnace or horizontal furnace.

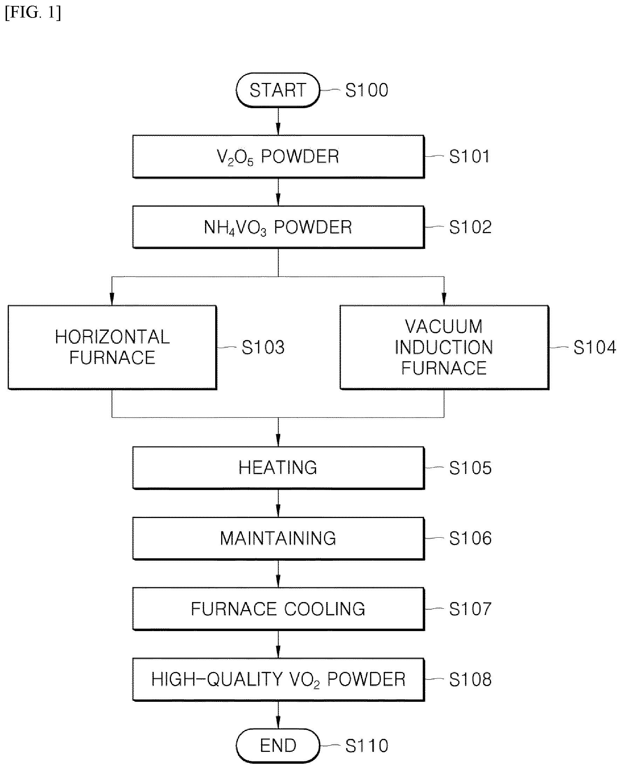

FIG. 1 is a process flow diagram of reduction of vanadium pentoxide (V₂O₅) using an ammonia solution and a process flow diagram using a horizontal furnace and a vacuum induction furnace according to an embodiment of the present disclosure.

Referring to FIG. 1, ammonia vanadate (NH₄VO₃) (S102) as an intermediate material may be prepared from vanadium pentoxide (V₂O₅) powder (S101) by using ammonia, the prepared ammonia vanadate (NH₄VO₃) (S102) may be put into a horizontal furnace (S103), and may be heated (S105) under normal pressure, maintained (S106) and furnace cooled (S107) in a horizontal furnace to finally obtain high-quality vanadium dioxide (VO₂) powder (S108).

### Method for partially reducing vanadium pentoxide under reduced pressure by using ammonia solution

According to the present disclosure, there is provided a method for partially reducing vanadium pentoxide (V₂O₅) under reduced pressure by using an ammonia solution to prepare vanadium dioxide (VO₂) powder from vanadium pentoxide (V₂O₅), which does not emit carbon dioxide that is a global warming gas, and has no risk of gas explosion, unlike a gas reduction method, and does not use large amounts of chemicals, does not generate large amounts of waste water, and has a short process time, unlike a wet method using an organic acid and sulfuric acid.

Further, the present disclosure provides a method of partially reducing vanadium pentoxide (V₂O₅) under reduced pressure by using an ammonia solution to prepare vanadium dioxide (VO₂) powder from vanadium pentoxide (V₂O₅), which inexpensively produces expensive aluminum-vanadium (AlV) alloy and vanadium dioxide (VO₂) powder used as a raw material for vanadium electrolyte in vanadium redox battery batteries and, thus, is economical.

Further, the present disclosure provides a method of partially reducing vanadium pentoxide (V₂O₅) under reduced pressure by using an ammonia solution to prepare vanadium dioxide (VO₂) powder from vanadium pentoxide (V₂O₅), which inexpensively produce vanadium dioxide (VO₂) powder which is cheaper than vanadium pentoxide (V₂O₅) powder and vanadium sulfate (VOSO₄) powder, has a shorter dissolution time in a sulfuric acid solution than vanadium pentoxide (V₂O₅) powder, and does not require additives such as acetic acid ((COOH)₂) during sulfuric acid leaching and, thus, is economical.

Further, the present disclosure provides a method of partially reducing vanadium pentoxide (V₂O₅) under reduced pressure by using an ammonia solution to prepare vanadium dioxide (VO₂) powder that is a vanadium raw material needed to reduce the use of aluminum powder as an expensive reducing agent in the process of preparing ferrovanadium and, thus, is economical.

The method for partially reducing vanadium pentoxide (V₂O₅) under reduced pressure by using an ammonia solution, comprising the steps of:
leaching vanadium pentoxide (V₂O₅) powder with an aqueous alkaline salt solution, followed by separation and filtration, and reaction with an ammonia solution to prepare ammonium vanadate (NH₄VO₃) powder;
heating the ammonium vanadate (NH₄VO₃) powder in a vacuum induction furnace under reduced pressure in a nitrogen or argon atmosphere, followed by maintaining for a certain period of time, to partially reduce the ammonium vanadate (NH₄VO₃) powder to vanadium dioxide (VO₂) powder; and
cooling the reduced vanadium dioxide (VO₂) powder in a vacuum induction furnace.

Here, the reducing agent for removing oxygen from vanadium pentoxide is hydrogen gas generated by thermal decomposition of ammonia vanadate (NH₄VO₃). The generated hydrogen gas reacts with oxygen attached to vanadium and removes oxygen, thereby partially reducing vanadium pentoxide to vanadium dioxide.

Preparation of the ammonia vanadate (NH₄VO₃) requires an aqueous alkaline salt solution and an ammonia solution.

The alkaline salt may be NaOH or KOH.

The leaching reaction may be performed at 20 to 80 °C for 0.5 to 24 hours.

The ammonia may be added, followed by reaction at 20 to 80° C for 0.5 to 24 hours, to prepare ammonia vanadate (NH₄VO₃).

Here, the ammonia component may comprise ammonium chloride (NH₄Cl), ammonium hydroxide (NH₄OH), ammonium sulfate ((NH4)2SO4), and ammonium nitrate (NH₄NO₃).

Further, the ammonium vanadate (NH₄VO₃) powder may be charged into an alumina crucible and heated in a vacuum induction furnace under reduced pressure in a nitrogen or argon atmosphere.

Here, the reduced pressure may be 0.001 atmosphere to 0.1 atmosphere.

At this time, if the pressure is reduced to less than 0.001 atmosphere, there may be problems that the effect of improving the reaction speed is minimal, and energy consumption increases. Further, if the reduced pressure exceeds 0.1 atmosphere, there may be a problem that the effect of improving the reaction rate is minimal.

Further, the ammonium vanadate (NH₄VO₃) powder may be heated to 300 to 480 °C.

Here, if the heating temperature is less than 300°C, there may be a problem that the reduction effect is reduced. Further, if the heating temperature exceeds 480°C, there may be problems that, although the reduction effect is minimal, volatilization loss of vanadium pentoxide (V₂O₅) having a high vapor pressure and energy consumption increase.

Further, the temperature may be maintained for 5 minutes to 2 hours after heating such that the ammonium vanadate (NH₄VO₃) powder is partially reduced to vanadium dioxide (VO₂) powder.

Here, if the heating time is less than 5 minutes, there may be a problem that the reduction effect is reduced. Further, if the heating time exceeds 2 hours, there may be problems that, although the reduction effect is minimal, volatilization loss of vanadium pentoxide (V₂O₅) having a high vapor pressure and energy consumption increase.

Further, the reduced vanadium dioxide (VO₂) powder may be cooled to 50 to 120° C in a vacuum induction furnace in a nitrogen or argon atmosphere.

At this time, the cooling may be performed in a vacuum induction furnace in a nitrogen or argon atmosphere.

Further, the method may further comprise cooling the reduced vanadium dioxide (VO₂) powder in the air after cooling the powder in a vacuum induction furnace.

FIG. 1 is a process flow diagram of reduction of vanadium pentoxide (V₂O₅) using an ammonia solution and a process flow diagram using a horizontal furnace and a vacuum induction furnace according to an embodiment of the present disclosure.

Referring again to FIG. 1, ammonia vanadate (NH₄VO₃) (S102) as an intermediate material may be prepared from vanadium pentoxide (V₂O₅) powder (S101) by using ammonia, the prepared ammonia vanadate (NH₄VO₃) (S102) may be put into a vacuum induction furnace (S104), and may be heated (S105) under reduced pressure, maintained (S106) and furnace cooled (S107) in a vacuum induction furnace to finally obtain high-quality vanadium dioxide (VO₂) powder (S108).

### Vanadium dioxide powder prepared under normal pressure and application examples thereof

Provided is vanadium dioxide powder prepared by the method for partially reducing vanadium pentoxide (V₂O₅) under normal pressure by using an ammonia solution.

Further, a vanadium redox battery prepared from the vanadium dioxide powder is provided.

Further, an aluminum-vanadium alloy prepared from the vanadium dioxide powder is provided.

### Vanadium dioxide powder prepared under reduced pressure and application examples thereof

Provided is vanadium dioxide powder prepared by the method for partially reducing vanadium pentoxide (V₂O₅) under reduced pressure by using an ammonia solution.

Further, a vanadium redox battery prepared from the vanadium dioxide powder is provided.

Further, an aluminum-vanadium alloy prepared from the vanadium dioxide powder is provided.

### [Mode for Invention]

Hereafter, preferred embodiments are proposed to help understand the present disclosure, but the following embodiments are intended to illustrate the present disclosure in more detail, and the scope of the present disclosure is not limited to the following embodiments. The following embodiments may be appropriately modified and changed by those skilled in the art within the scope of the present disclosure.

### <Analysis method>

Elemental analysis was performed by using Inductively Coupled Plasma (ICP) (JY-38 plus, Horiba, Japan) and X-ray Fluorescence Spectrometer (XRF) (MXF-2400, Shimadzu, Japan).

Further, crystal structure analysis was performed by using X-ray diffraction (XRD) (Rigaku D-max-2500PC, Rigaku/MSC, Inc., USA).

### <Embodiment>

### <Embodiment 1> Preparing ammonia Vanadate

250 g of vanadium pentoxide (V₂O₅: 98.4 wt%) was leached with 1.7 L of 2 M NaOH solution at 60°C for 4 hours, followed by separation and filtration, addition with 294 g of NH₄Cl, and reaction at 25°C for 4 hours to prepare ammonia vanadate (NH₄VO₃) as an intermediate material.

The prepared ammonia vanadate (NH₄VO₃) was washed with 5 L H₂O to remove a small amount of NaOH and NH₄Cl introduced to the surface thereof.

The ammonia vanadate (NH₄VO₃) recovered after washing was dried at 60°C for 12 hours to be used as a raw material.

### <Embodiment 2> Preparing vanadium dioxide powder under normal pressure

30 g of ammonia vanadate (NH₄VO₃) powder prepared in Embodiment 1 was charged into an alumina crucible to be placed in a horizontal furnace as a heater, was blown at 1 L/min into argon under normal pressure to maintain the inside of the horizontal furnace in an argon atmosphere, and was heated to 575°C and maintained for 15 minutes.

Then, it was cooled below 100°C and the alumina crucible was cooled in air to prepare vanadium dioxide (VO₂) powder.

Afterwards, the crystal structure of the prepared vanadium dioxide (V₂O₅) powder was analyzed by using X-ray diffraction analysis.

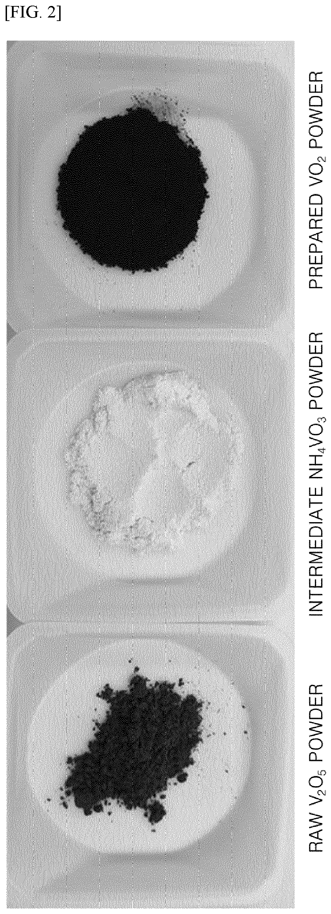

FIG. 2 shows photographs of vanadium pentoxide (V₂O₅) powder as a raw material and ammonia vanadate (NH₄VO₃) powder as an intermediate material used in Embodiment 1 of the present disclosure, and vanadium dioxide (VO₂) powder prepared in Embodiment 1 of the present disclosure.

Referring to FIG. 2, it was confirmed that vanadium pentoxide (V₂O₅) powder as a light ocher-colored raw material and ammonia vanadate (NH₄VO₃) powder as a prepared white intermediate material were used, and the process of Embodiment 1 was performed to obtain blue-black vanadium dioxide (V₂O₅) powder.

### <Embodiment 3> Preparing vanadium dioxide powder under reduced pressure

30 g of ammonia vanadate (NH₄VO₃) powder prepared in Embodiment 1 was charged into an alumina crucible to be placed in a vacuum induction furnace as a heater, maintained at 0.01 atmosphere under reduced pressure in an argon atmosphere, and then heated to 400° C and maintained for 60 minutes.

Then, it was cooled below 100°C in the vacuum induction furnace, and the alumina crucible was cooled in air to prepare vanadium dioxide (VO₂) powder.

Afterwards, the crystal structure of the prepared vanadium dioxide (V₂O₅) powder was analyzed by using X-ray diffraction analysis.

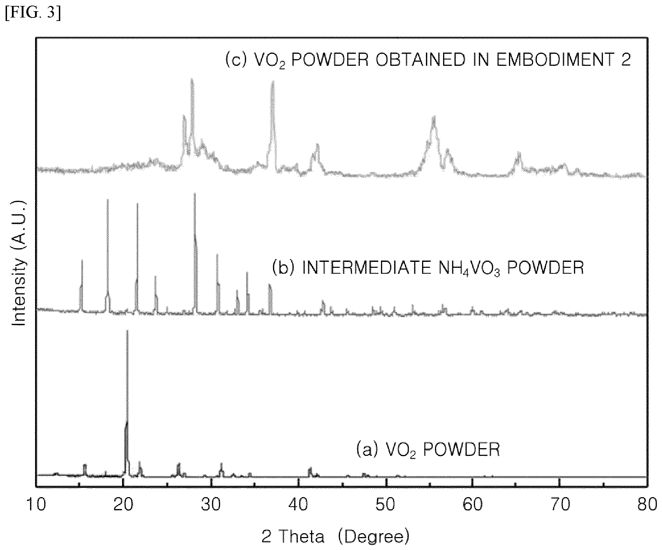

FIG. 3 shows the results of X-ray diffraction analysis (XRD) of vanadium pentoxide (V₂O₅) powder as a raw material and ammonia vanadate (NH₄VO₃) powder as an intermediate material used in Embodiment 2 of the present disclosure and vanadium dioxide (VO₂) powder prepared in Embodiment 2 of the present disclosure.

It was confirmed therefrom that the powder obtained in Embodiment 2 was vanadium dioxide (VO₂) powder.

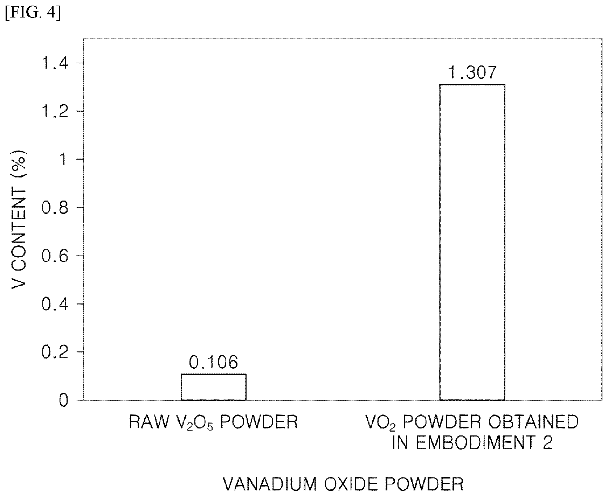

FIG. 4 is a leaching rate graph of vanadium pentoxide (V₂O₅) powder as a raw material used in Embodiment 2 of the present disclosure, and vanadium dioxide (VO₂) powder prepared in Embodiment 2 of the present disclosure.

Here, as the conditions for leaching, 3 g of vanadium pentoxide powder was added to 150 mL of 5 M sulfuric acid solution, and 3 g of vanadium dioxide powder prepared in Embodiment 2 was added to 150 mL of 5 M sulfuric acid solution, each of the mixtures was stirred for 24 hours, and the content of vanadium dissolved in each of the sulfuric acid solutions was analyzed to compare their leaching rates as shown in Table 1 below.

**[Table 1]**

| Element | Sulfuric acid leachate content (mg/kg) | |
|---|---|---|
| | V₂O₅ | VO₂ |
| V | 1060.25 | 13067.89 |
| Al | 8.08 | ND |
| Na | 24.31 | 3.37 |
| K | 1.48 | ND |
| Fe | ND | ND |

Table 1 above shows the ICP analysis data for analyzing the leaching rates of vanadium pentoxide (V₂O₅) powder as the raw material used to prepare the graph in FIG. 4 and vanadium dioxide (VO₂) powder prepared in Embodiment 2.

Referring to Table 1, it was confirmed that the amount of vanadium sulfate leached from vanadium dioxide (VO₂) powder was significantly higher than that of vanadium pentoxide (V₂O₅) powder.

Therefore, it was confirmed that vanadium was easily leached from vanadium dioxide (VO₂) powder.

The results of Table 1 above mean that using the vanadium dioxide (VO₂) powder prepared in the present disclosure to prepare a vanadium electrolyte for vanadium redox batteries has a shorter dissolution time in a sulfuric acid solution, as compared to using vanadium pentoxide (V₂O₅) powder, and does not require additives such as acetic acid ((COOH)₂) during sulfuric acid leaching.

Embodiments about a method for partially reducing vanadium pentoxide (V₂O₅) by using an ammonia solution and vanadium dioxide (VO₂) powder prepared therefrom according to the present disclosure were described above, but it is apparent that various modifications may be achieved without departing from the scope of the present disclosure.

Therefore, the scope of the present disclosure should not be limited to the embodiment(s) and should be determined by not only the following claims, but equivalents of the claims.

That is, it should be understood that the embodiments described above are not limitative, but only examples in all respects, the scope of the present disclosure is expressed by claims described below, not the detailed description, and it should be construed that all of changes and modifications achieved from the meanings and scope of claims and equivalent concept are included in the scope of the present disclosure.

### [Industrial Applicability]

The present disclosure can be used in a method for partially reducing vanadium pentoxide (V₂O₅) by using an ammonia solution and vanadium dioxide (VO₂) powder prepared therefrom.

## Claims

1. A method for partially reducing vanadium pentoxide (V₂O₅) by using an ammonia solution, comprising:
leaching vanadium pentoxide (V₂O₅) powder with an aqueous alkaline salt solution, followed by separation and filtration, and reaction with an ammonia solution to prepare ammonium vanadate (NH₄VO₃) powder;
heating the ammonium vanadate (NH₄VO₃) powder in an electric furnace or horizontal furnace under normal pressure in a nitrogen or argon atmosphere, followed by maintaining for a certain period of time, to partially reduce the ammonium vanadate (NH₄VO₃) powder to vanadium dioxide (VO₂) powder; and
cooling the reduced vanadium dioxide (VO₂) powder in an electric furnace or horizontal furnace.

2. A method for partially reducing vanadium pentoxide (V₂O₅) by using an ammonia solution, comprising:
leaching vanadium pentoxide (V₂O₅) powder with an aqueous alkaline salt solution, followed by separation and filtration, and reaction with an ammonia solution to prepare ammonium vanadate (NH₄VO₃) powder;
heating the ammonium vanadate (NH₄VO₃) powder in a vacuum induction furnace under reduced pressure in a nitrogen or argon atmosphere, followed by maintaining for a certain period of time, to partially reduce the ammonium vanadate (NH₄VO₃) powder to vanadium dioxide (VO₂) powder; and
cooling the reduced vanadium dioxide (VO₂) powder in a vacuum induction furnace.

3. The method for partially reducing vanadium pentoxide (V₂O₅) by using an ammonia solution according to claim 1, wherein the alkaline salt is NaOH or KOH.

4. The method for partially reducing vanadium pentoxide (V₂O₅) by using an ammonia solution according to claim 1, wherein the leaching reaction is performed at 20 to 80 °C for 0.5 to 24 hours.

5. The method for partially reducing vanadium pentoxide (V₂O₅) by using an ammonia solution according to claim 1, wherein the ammonia is added, followed by reaction at 20 to 80° C for 0.5 to 24 hours, to prepare ammonia vanadate (NH₄VO₃).

6. The method for partially reducing vanadium pentoxide (V₂O₅) by using an ammonia solution according to claim 1, wherein the ammonium vanadate (NH₄VO₃) powder is charged into an alumina crucible and heated in an electric furnace or horizontal furnace under normal pressure in a nitrogen or argon atmosphere.

7. The method for partially reducing vanadium pentoxide (V₂O₅) by using an ammonia solution according to claim 1, wherein the ammonium vanadate (NH₄VO₃) powder is heated to 500 to 800 °C.

8. The method for partially reducing vanadium pentoxide (V₂O₅) by using an ammonia solution according to claim 1, wherein the temperature is maintained for 5 minutes to 2 hours after heating the ammonium vanadate (NH₄VO₃) powder to partially reduce the ammonium vanadate (NH₄VO₃) powder to vanadium dioxide (VO₂) powder.

9. The method for partially reducing vanadium pentoxide (V₂O₅) by using an ammonia solution according to claim 1, wherein the reduced vanadium dioxide (VO₂) powder is cooled to 50 to 120° C in an electric furnace or horizontal furnace in a nitrogen or argon atmosphere.

10. The method for partially reducing vanadium pentoxide (V₂O₅) by using an ammonia solution according to claim 1, further comprising cooling the reduced vanadium dioxide (VO₂) powder in the air after cooling the powder in an electric furnace or a horizontal furnace.

11. The method for partially reducing vanadium pentoxide (V₂O₅) by using an ammonia solution according to claim 2, wherein the alkaline salt is NaOH or KOH.

12. The method for partially reducing vanadium pentoxide (V₂O₅) by using an ammonia solution according to claim 2, wherein the leaching reaction is performed at 20 to 80 °C for 0.5 to 24 hours.

13. The method for partially reducing vanadium pentoxide (V₂O₅) by using an ammonia solution according to claim 2, wherein the ammonia is added, followed by reaction at 20 to 80° C for 0.5 to 24 hours, to prepare ammonia vanadate (NH₄VO₃).

14. The method for partially reducing vanadium pentoxide (V₂O₅) by using an ammonia solution according to claim 2, wherein the ammonium vanadate (NH₄VO₃) powder is charged into an alumina crucible and heated in a vacuum induction furnace under reduced pressure in a nitrogen or argon atmosphere.

15. The method for partially reducing vanadium pentoxide (V₂O₅) by using an ammonia solution according to claim 2, wherein the reduced pressure is 0.001 atmosphere to 0.1 atmosphere.

16. The method for partially reducing vanadium pentoxide (V₂O₅) by using an ammonia solution according to claim 2, wherein the ammonium vanadate (NH₄VO₃) powder is heated to 300 to 480 °C.

17. The method for partially reducing vanadium pentoxide (V₂O₅) by using an ammonia solution according to claim 2, wherein the temperature is maintained for 5 minutes to 2 hours after heating the ammonium vanadate (NH₄VO₃) powder to partially reduce the ammonium vanadate (NH₄VO₃) powder to vanadium dioxide (VO₂) powder.

18. The method for partially reducing vanadium pentoxide (V₂O₅) by using an ammonia solution according to claim 2, wherein the reduced vanadium dioxide (VO₂) powder is cooled to 50 to 120° C in a vacuum induction furnace in a nitrogen or argon atmosphere.

19. The method for partially reducing vanadium pentoxide (V₂O₅) by using an ammonia solution according to claim 2, further comprising cooling the reduced vanadium dioxide (VO₂) powder in the air after cooling the powder in a vacuum induction furnace.

20. Vanadium dioxide powder prepared by a method for partially reducing vanadium pentoxide (V₂O₅) under normal pressure by using an ammonia solution according to any one of claims 1 and 3 to 10.

21. A vanadium redox battery prepared by the vanadium dioxide powder according to claim 20.

22. An aluminum-vanadium alloy prepared by the vanadium dioxide powder according to claim 20.

23. Vanadium dioxide powder prepared by a method for partially reducing vanadium pentoxide (V₂O₅) under reduced pressure by using an ammonia solution according to any one of claims 2 and 11 to 19.

24. A vanadium redox battery prepared by the vanadium dioxide powder according to claim 23.

25. An aluminum-vanadium alloy prepared by the vanadium dioxide powder according to claim 23.

## Amended claims

### Amended claims under Art. 19.1 PCT

1. (Amended) A method for partially reducing vanadium pentoxide (V₂O₅) by using an ammonia solution, comprising:
leaching vanadium pentoxide (V₂O₅) powder with an aqueous alkaline salt solution of NaOH or KOH, followed by separation and filtration, and reaction with an ammonia solution to prepare ammonium vanadate (NH₄VO₃) powder;
heating the ammonium vanadate (NH₄VO₃) powder at 560 to 720 °C in an electric furnace or horizontal furnace under normal pressure in a nitrogen or argon atmosphere and maintaining the heating temperature for 5 minutes to 2 hours to partially reduce the ammonium vanadate (NH₄VO₃) powder to vanadium dioxide (VO₂) powder; and
cooling the reduced vanadium dioxide (VO₂) powder to 50 to 120° C in an electric furnace or horizontal furnace in a nitrogen or argon atmosphere.

2. (Amended) A method for partially reducing vanadium pentoxide (V₂O₅) by using an ammonia solution, comprising:
leaching vanadium pentoxide (V₂O₅) powder with an aqueous alkaline salt solution of NaOH or KOH, followed by separation and filtration, and reaction with an ammonia solution to prepare ammonium vanadate (NH₄VO₃) powder;
heating the ammonium vanadate (NH₄VO₃) powder at 300 to 480 °C in a vacuum induction furnace under reduced pressure in a nitrogen or argon atmosphere, wherein the reduced pressure is 0.001 atmosphere to 0.1 atmosphere, and maintaining the heating temperature for 5 minutes to 2 hours to partially reduce the ammonium vanadate (NH₄VO₃) powder to vanadium dioxide (VO₂) powder; and
cooling the reduced vanadium dioxide (VO₂) powder to 50 to 120° C in a vacuum induction furnace in a nitrogen or argon atmosphere.

3. (Deleted)

4. The method for partially reducing vanadium pentoxide (V₂O₅) by using an ammonia solution according to claim 1, wherein the leaching reaction is performed at 20 to 80 °C for 0.5 to 24 hours.

5. The method for partially reducing vanadium pentoxide (V₂O₅) by using an ammonia solution according to claim 1, wherein the ammonia is added, followed by reaction at 20 to 80° C for 0.5 to 24 hours, to prepare ammonia vanadate (NH₄VO₃).

6. The method for partially reducing vanadium pentoxide (V₂O₅) by using an ammonia solution according to claim 1, wherein the ammonium vanadate (NH₄VO₃) powder is charged into an alumina crucible and heated in an electric furnace or horizontal furnace under normal pressure in a nitrogen or argon atmosphere.

7. (Deleted)

8. (Deleted)

9. (Deleted)

10. The method for partially reducing vanadium pentoxide (V₂O₅) by using an ammonia solution according to claim 1, further comprising cooling the reduced vanadium dioxide (VO₂) powder in the air after cooling the powder in an electric furnace or a horizontal furnace.

11. (Deleted)

12. The method for partially reducing vanadium pentoxide (V₂O₅) by using an ammonia solution according to claim 2, wherein the leaching reaction is performed at 20 to 80 °C for 0.5 to 24 hours.

13. The method for partially reducing vanadium pentoxide (V₂O₅) by using an ammonia solution according to claim 2, wherein the ammonia is added, followed by reaction at 20 to 80° C for 0.5 to 24 hours, to prepare ammonia vanadate (NH₄VO₃).

14. The method for partially reducing vanadium pentoxide (V₂O₅) by using an ammonia solution according to claim 2, wherein the ammonium vanadate (NH₄VO₃) powder is charged into an alumina crucible and heated in a vacuum induction furnace under reduced pressure in a nitrogen or argon atmosphere.

15. (Deleted)

16. (Deleted)

17. (Deleted)

18. (Deleted)

19. The method for partially reducing vanadium pentoxide (V₂O₅) by using an ammonia solution according to claim 2, further comprising cooling the reduced vanadium dioxide (VO₂) powder in the air after cooling the powder in a vacuum induction furnace.

20. (Amended) Vanadium dioxide powder prepared by a method for partially reducing vanadium pentoxide (V₂O₅) under normal pressure by using an ammonia solution according to any one of claims 1, 4 to 6 and 10.

21. A vanadium redox battery prepared by the vanadium dioxide powder according to claim 20.

22. An aluminum-vanadium alloy prepared by the vanadium dioxide powder according to claim 20.

23. (Amended) Vanadium dioxide powder prepared by a method for partially reducing vanadium pentoxide (V₂O₅) under reduced pressure by using an ammonia solution according to any one of claims 2, 12 to 14 and 19.

24. A vanadium redox battery prepared by the vanadium dioxide powder according to claim 23.

25. An aluminum-vanadium alloy prepared by the vanadium dioxide powder according to claim 23.
